# EUROPÄISCHE PATENTSCHRIFT

(11) **EP 1 190 915 B1**
(45) Veröffentlichungstag und Bekanntmachung des Hinweises auf die Patenterteilung: **24.08.2005**
(21) Anmeldenummer: 01121419.4
(22) Anmeldetag: 07.09.2001
(51) Int. Cl.: B60R 19/18, B60R 19/48, B60D 1/14

(54) **Stossdämpfer für Personenkraftfahrzeug**
Bumper for motor vehicle
Pare-chocs de véhicule automobile

(30) Priorität: 20.09.2000 DE 10046595
(43) Veröffentlichungstag der Anmeldung: 27.03.2002
(73) Patentinhaber: ORIS FAHRZEUGTEILE HANS RIEHLE GmbH, 71696 Möglingen (DE)
(72) Erfinder: Dunsch, Jürgen, 71229 Leonberg (DE); Riehle, Jörg, 70439 Stuttgart (DE)
(74) Vertreter: Hoeger, Stellrecht & Partner Patentanwälte

(56) Entgegenhaltungen:
- EP-A- 0 501 150
- EP-A- 0 716 961
- DE-A- 2 607 394
- DE-A- 3 345 408
- US-A- 3 992 047
- US-A- 4 186 915
- US-A- 5 658 027
- PATENT ABSTRACTS OF JAPAN vol. 009, no. 264 (M-423), 22. Oktober 1985 (1985-10-22) & JP 60 110548 A (NISSAN JIDOSHA KK), 17. Juni 1985 (1985-06-17)

## Beschreibung

Die Erfindung betrifft ein Personenkraftfahrzeug, umfassend eine Fahrzeugkarosserie mit einem Fahrzeugheck, ein im Abstand von dem Fahrzeugheck angeordnete Stoßfängereinrichtung, welche eine Stoßfängerverkleidung und ein durch Deformation Aufprallenergie abbauendes Aufprallelement mit einer dem Fahrzeugheck abgewandten Aufprallseite aufweist und welche im Bereich zweier seitlicher Montagestellen mit der Fahrzeugkarosserie verbunden ist.

Derartige Stoßfängereinrichtungen sind bekannt. Bei diesen besteht jedoch das Problem, daß diese nicht die Möglichkeit des Anbaus eines Anbauquerträgers zulassen, welcher erforderlich ist, um beispielsweise eine Anhängekupplung oder Hecklastenträger am Fahrzeug zu montieren.

Darüber hinaus wird selbst im Fall eines Anbauquerträgers kein zufriedenstellendes Crashverhalten mehr erreicht.

Der Erfindung liegt die Aufgabe zugrunde, ein Personenkraftfahrzeug der in der gattungsbildenden US-A-5658027 beschriebenen Art derart zu verbessern, daß dieses einen Anbauquerträger erlaubt und außerdem noch ein vorteilhaftes Crashverhalten aufweist.

Diese Aufgabe wird bei einem Personenkraftfahrzeug der eingangs beschriebenen Art erfindungsgemäß durch die Merkmale des Anspruchs 1 gelöst.

Der Vorteil dieser Lösung ist darin zu sehen, daß durch eine derartige Ausbildung des Aufprallelements die Möglichkeit geschaffen wurde, einen Anbauquerträger einzusetzen, ohne daß dieser negativ die Crasheigenschaften bei niedriger Aufprallgeschwindigkeit beeinträchtigt, so daß durch das Aufprallelement ein optimales Crashverhalten erreichbar ist, das keinerlei Sicherheitseinbußen durch den Anbauquerträger aufweist.

Das Aufprallelement könnte lediglich aus dem ersten, in Fahrzeuglängsrichtung vor der Vorderseite des Anbauquerträgers angeordneten Teilkörper gebildet sein. Dieser Teilkörper kann jedoch vielfach nicht mit ausreichend großem Volumen und ausreichend großer Steifigkeit gestaltet werden, daß sich das optimale Crashverhalten erreichen läßt.

Aus diesem Grund ist es besonders günstig, wenn das Aufprallelement einen zweiten Teilkörper aufweist, welcher in vertikaler Richtung gegenüber dem Anbauquerträger versetzt angeordnet ist. Mit einem derartigen zweiten Teilkörper besteht die Möglichkeit, das notwendige Steifigkeits- und Dehnungsvolumen zur Verfügung zu stellen, das für die gewünschte Ausbildung des Aufprallelements erforderlich ist.

Dabei könnte der zweite Teilkörper ein separater Teilkörper des Aufprallelements sein. Besonders günstig ist es jedoch, wenn der zweite Teilkörper mit dem ersten Teilkörper fest verbunden ist.

Um die Energieabbaukapazität exakt abstimmen zu können, ist es besonders günstig, wenn der zweite Teilkörper mit dem ersten Teilkörper ein einstückiges Teil bildet, so daß beide zusammen dann die erwünschte Energieabbaukapazität zur Verfügung stellen.

Um insbesondere Bauraum für den zweiten Teilkörper zu erhalten ist es besonders günstig, wenn der zweite Tellkörper den Anbauquerträger in Fahrzeuglängsrichtung und in Richtung des Fahrzeughecks übergreift.

Um auch bei höheren Aufprallgeschwindigkeiten als den vorstehend genannten niedrigen Aufprallgeschwindigkeiten ein vorteilhaftes Crashverhalten zu erreichen, ist vorzugsweise vorgesehen, daß das Aufprallelement mit einer derartigen plastischen Energieabbaukapazität versehen ist, daß bei einer geringen Aufprallgeschwindigkeit im Bereich von ungefähr 5 km/h bis ungefähr 15 km/h gegen eine feste Barriere eine derartige plastische Deformation des Aufprallelements erfolgt, daß die Aufprallseite maximal die Vorderseite des Anbauquerträgers erreicht. Diese Lösung hat den großen Vorteil, daß auch damit keine unmittelbare Abstützung auf dem Anbauquerträger erreichbar ist, sondern die Energieabbaukapazität durch das Aufprallelement selbst zur Verfügung gestellt wird und somit im wesentlichen allein über das Aufprallelement das Crashverhalten des Fahrzeugs festlegbar ist.

Um die erfindungsgemäße Stoßfängereinrichtung in Fahrzeuglängsrichtung nicht allzu groß bauend auszurichten, ist vorzugsweise vorgesehen, daß bei der plastischen Deformation des Aufprallelements der in Fahrzeuglängsrichtung im Abstand vom Anbauquerträger angeordnete erste Teilkörper eine Volumenverringerung auf weniger als 20% seines Ausgangsvolumens erfährt, vorzugsweise im wesentlichen sein Volumen verliert, so daß diese Volumenverringerung für den Abbau der plastischen Energie zur Verfügung steht.

Darüber hinaus ist es vorteilhaft, wenn bei der plastischen Deformation des Aufprallelements der zweite Teilkörper des Aufprallelements eine Volumenverringerung auf weniger als 70% seines Ausgangsvolumens erfährt. Eine derartige geringer Volumenverringerung des zweiten Teilkörpers gegenüber dem ersten Teilkörper hat den Vorteil, daß dadurch der zweite Teilkörper noch zur nennenswerten Versteifung des Aufprallelements auch bei der plastischen Deformation zur Verfügung steht und somit aufgrund seines noch nennenswerten Volumens bei und nach der plastischen Deformation in der Lage ist, durch seine Eigensteifigkeit eine Beschädigung des Fahrzeughecks zu vermeiden.

Besonders günstig ist es dabei, wenn das Aufprallelement so ausgebildet ist, daß bei einem plastischen Energieabbau bei der geringen Aufprallgeschwindigkeit des Kraftfahrzeugs von ungefähr 5 km/h bis ungefähr 15 km/h auf eine feste Barriere eine Rückseite des zweiten Teilkörpers maximal das Fahrzeugheck erreicht und somit keinerlei Beschädigung des Fahrzeughecks selbst stattfindet.

Hinsichtlich der Anordnung des zweiten Teilkörpers wurden im Zusammenhang mit der bisherigen Beschreibung der erfindungsgemäßen Lösung keine näheren Angaben gemacht. So sieht eine besonders vorteilhafte Lösung vor, daß der zweite Teilkörper in vertikaler Richtung oberhalb des Anbauquerträgers liegt.

Eine andere Lösung sieht vor, daß der zweite Teilkörper in vertikaler Richtung unterhalb des Anbauquerträgers liegt.

Eine besonders günstige Lösung sieht vor, daß das Aufprallelement einen in vertikaler Richtung oberhalb des Anbauquerträgers und einen in vertikaler Richtung unterhalb des Anbauquerträgers liegenden zweiten Teilkörper aufweist, so daß die beiden zweiten Teilkörper beiderseits des ersten Teilkörpers wirken und diesen günstig versteifen können.

Besonders günstig ist es dabei, wenn die beiden zweiten Teilkörper den Anbauquerträger in Fahrzeuglängsrichtung übergreifen und somit beiderseits zur erhöhten Versteifung des Aufprallelements beitragen.

Hinsichtlich des Einsatzes des Anbauquerträgers wurden im Rahmen der bislang erläuterten Ausführungsbeispiele der erfindungsgemäßen Lösung keine detaillierten Angaben gemacht. So sieht eine besonders günstige Lösung vor, das an dem Anbauquerträger ein Lagerelement für eine Anhängekupplung angeordnet ist. Ein derartiges Lagerelement könnte beispielsweise eine Aufnahme oder für eine abnehmbare Anhängekupplung oder ein Drehlager für eine schwenkbare Anhängekupplung sein.

Eine weitere günstige Lösung sieht vor, daß an den Anbauquerträger ein Lagerelement für Hecklasten vorgesehen ist.

Derartige Hecklasten könnten beispielsweise Hecklastenträger sein, die speziell für den Anbauquerträger konzipiert sind. Eine andere Möglichkeit derartiger Hecklasten sind Ersatzradträger oder andere Tragelemente.

Der Vorteil dieser Lösung ist darin zu sehen, daß mit einem derartigen Anbauquerträger die Möglichkeit besteht, relativ schwere Hecklasten vorzusehen, die aufgrund der mangelnden Eigensteifigkeit der Fahrzeugkarosserie über eine der üblichen Montagestellen nicht montiert werden können.

Nicht erfindungsgemäß kann auch zwischen einer dem Fahrzeugheck zugewandten Rückseite zumindest eines ersten Teilkörpers des Aufprallelements und dem Fahrzeugheck ein Freiraum vorgesehen sein, und in Fahrzeuglängsrichtung zwischen der Rückseite des ersten Teilkörpers und dem Freiraum ein Zwischenraum vorgesehen sein und das Aufprallelement mit einer derartigen elastischen Energieabbaukapazität versehen sein, daß bei einer niedrigen Aufprallgeschwindigkeit des Kraftfahrzeugs im Bereich von 0 bis ungefähr 5 km/h gegen eine feste Barriere lediglich eine derartige elastische Deformation des Aufprallelements erfolgt, daß die Rückseite des Teilkörpers außerhalb des im Anschluß an das Fahrzeugheck vorgesehenen Freiraums verbleibt.

Der Vorteil dieser nicht erfindungsgemäßen Lösung ist darin zu sehen, daß durch das Vorsehen eines Freiraums zwischen dem Fahrzeugheck und dem ersten Teilkörper auch bei einer elastischen Deformation des Aufprallelements die Möglichkeit besteht, bei einem derartigen Aufprallelement einen Anbauquerträger in dem Freiraum zu montieren, dessen Montage dann das Crashverhalten des Aufprallelements nicht beeinträchtigt.

Um eine möglichst hohe Energieabbaukapazität zur Verfügung zu haben ist vorzugsweise vorgesehen, daß das Aufprallelement einen zweiten Teilkörper aufweist, welcher in vertikaler Richtung gegenüber dem Freiraum versetzt angeordnet ist, so daß dieser zweite Teilkörper den Freiraum nicht tangiert und die Möglichkeit eröffnet, mit diesem zweiten Teilkörper einerseits eine ausreichende Steifigkeit des Aufprallelements zu erreichen und andererseits Energieabbaukapazität zur Verfügung zu stellen.

Vorzugsweise ist dabei der zweite Teilkörper mit dem ersten Teilkörper fest verbunden. Noch besser ist es, wenn der zweite Teilkörper mit dem ersten Teilkörper ein einstückiges Teil bildet.

Eine besonders günstige Lösung sieht vor, daß der zweite Teilkörper den Freiraum in Fahrzeuglängsrichtung und in Richtung des Fahrzeughecks übergreift und somit trotz des Freiraums ausreichend Volumen für die Ausbildung des Aufprallelements zumindest im Bereich des zweiten Teilkörpers zur Verfügung steht.

Um über die elastische Deformation des Aufprallelements hinaus ein vorteilhaftes Crashverhalten zu erreichen ist vorzugsweise vorgesehen, daß das Aufprallelement mit einer derartigen plastischen Energieabbaukapazität versehen ist, daß bei einer geringen Aufprallgeschwindigkeit im Bereich von ungefähr 5 km/h bis ungefähr 15 km/h eine derartige plastische Deformation des Aufprallelements erfolgt, daß die Aufprallseite maximal den Freiraum erreicht, nicht jedoch in diesen eindringt.

Damit ist ebenfalls sichergestellt, daß selbst bei plastischer Deformation der spätere oder nachträgliche Einbau eines Anbauquerträgers in die Stoßfängereinrichtung das Crashverhalten des Aufprallelements nicht beeinträchtigt.

Besonders günstig läßt sich dieses Crashverhalten realisieren, wenn bei der plastischen Deformation des Aufprallelements der in Fahrzeuglängsrichtung im Abstand vom Freiraum angeordnete erste Teilkörper eine Volumenverringerung auf weniger als 20% des Ausgangsvolumens erfährt.

Um noch eine nennenswerte Stabilität des Aufprallelements aufrecht zu erhalten, ist vorgesehen, daß bei der plastischen Deformation des Aufprallelements der zweite Teilkörper des Aufprallelements eine Volumenverringerung auf weniger als 70% des Ausgangsvolumens, insbesondere jedoch weniger als 30% des Ausgangsvolumens, erfährt.

Um jegliche Beschädigungen des Fahrzeughecks zu vermeiden ist vorzugsweise vorgesehen, daß das Aufprallelement so ausgebildet ist, daß bei einem plastischen Energieabbau bei der geringen Aufprallgeschwindigkeit des Kraftfahrzeugs von ungefähr 5 km/h bis ungefähr 15 km/h auf eine feste Barriere eine Rückseite des zweiten Teilkörpers maximal das Fahrzeugheck erreicht.

Hinsichtlich der Ausbildung des Aufprallelements wurden bislang keine speziellen Lösungen diskutiert. Eine besonders günstige Lösung sieht vor, daß der zweite Teilkörper in vertikaler Richtung oberhalb des Freiraums liegt.

Eine andere Lösung sieht vor, daß der zweite Teilkörper in vertikaler Richtung unterhalb des Freiraums liegt.

Eine besonders günstige Lösung sieht vor, daß das Aufprallelement einen in vertikaler Richtung oberhalb des Freiraums und einen in vertikaler Richtung unterhalb des Freiraums liegenden zweiten Teilkörper aufweist.

Dabei läßt sich eine besonders hohe Stabilität und eine besonders hohe Energieabbaukapazität des Aufprallelements dann erreichen, wenn die beiden zweiten Teilkörper den Freiraum in Fahrzeuglängsrichtung übergreifen.

Hinsichtlich der Dimensionen des Freiraums wurden im Zusammenhang mit den entsprechenden Ausführungsbeispielen keine näheren Angaben gemacht. So ist es besonders günstig, wenn der Freiraum mindestens die Größe eines Anbauquerträgers hat. Im ganz speziell angepaßten Fall ist vorzugsweise der Freiraum so dimensioniert, daß er genau die Ausdehnung und Größe des Anbauquerträgers aufweist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Ansicht der Fahrzeugkarosserie eines ersten Ausführungsbeispiels des erfindungsgemäßen Personenkraftfahrzeugs von unten in Richtung des Pfeils A in Fig. 3;
- Fig. 2: einen Schnitt durch das erste Ausführungsbeispiel des erfindungsgemäßen Personenkraftfahrzeugs längs Linie 2-2 in Fig. 3
- Fig. 3: einen Schnitt längs Linie 3-3 in Fig. 1;
- Fig. 4: einen Schnitt entsprechend Fig. 3 bei elastischer Deformation eines Aufprallelements des ersten Ausführungsbeispiels des erfindungsgemäßen Personenkraftfahrzeugs;
- Fig. 5: einen Schnitt entsprechend Fig. 3 bei plastischer Deformation des Aufprallelements des ersten Ausführungsbeispiels des erfindungsgemäßen Kraftfahrzeugs;
- Fig. 6: eine perspektivische Darstellung einer Stoßfängereinheit des ersten Ausführungsbeispiels des erfindungsgemäßen Personenkraftfahrzeugs mit an einem Anbauquerträger angeordneten Einheiten;
- Fig. 7: einen Schnitt ähnlich Fig. 3 durch ein zweites Ausführungsbeispiel des erfindungsgemäßen Personenkraftfahrzeugs;
- Fig. 8: einen Schnitt ähnlich Fig. 4 durch das zweite Ausführungsbeispiel des erfindungsgemäßen Personenkraftfahrzeugs;
- Fig. 9: einen Schnitt ähnlich Fig. 5 durch das zweite Ausführungsbeispiel des erfindungsgemäßen Personenkraftfahrzeugs;
- Fig. 10: einen Schnitt ähnlich Fig. 3 durch ein drittes Ausführungsbeispiel des erfindungsgemäßen Personenkraftfahrzeugs;
- Fig. 11: einen Schnitt ähnlich Fig. 4 durch das dritte Ausführungsbeispiels des erfindungsgemäßen Personenkraftfahrzeugs;
- Fig. 12: einen Schnitt ähnlich Fig. 5 durch das dritte Ausführungsbeispiel des erfindungsgemäßen Personenkraftfahrzeugs;

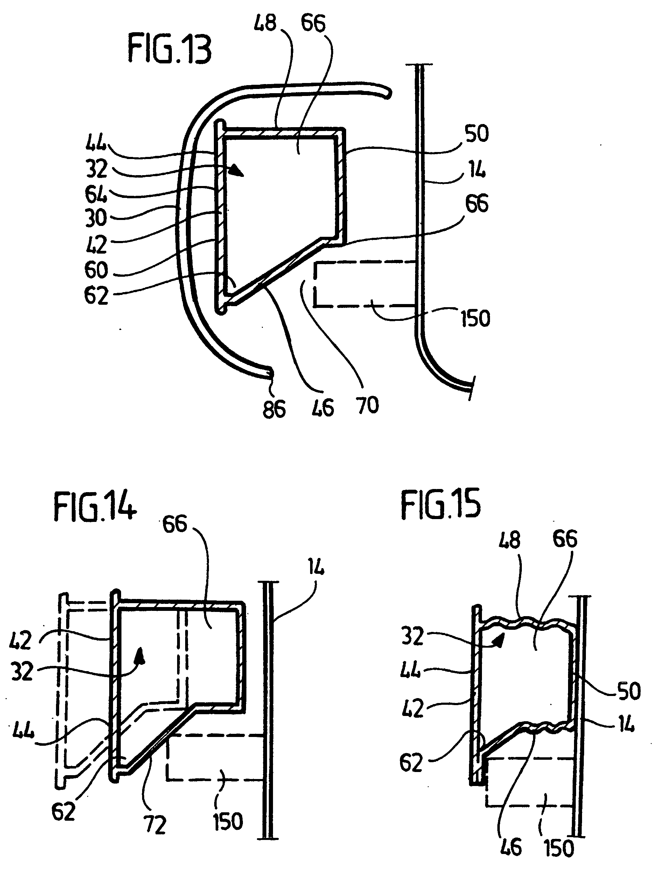

- Fig. 13: einen Schnitt ähnlich Fig. 3 durch ein Beispiel eines nicht erfindungsgemäßen Personenkraftfahrzeugs;
- Fig. 14: einen Schnitt ähnlich Fig. 4 durch das Beispiel des nicht erfindungsgemäßen Personenkraftfahrzeugs und
- Fig. 15: einen Schnitt ähnlich Fig. 5 durch das Beispiel des nicht erfindungsgemäßen Personenkraftfahrzeugs.

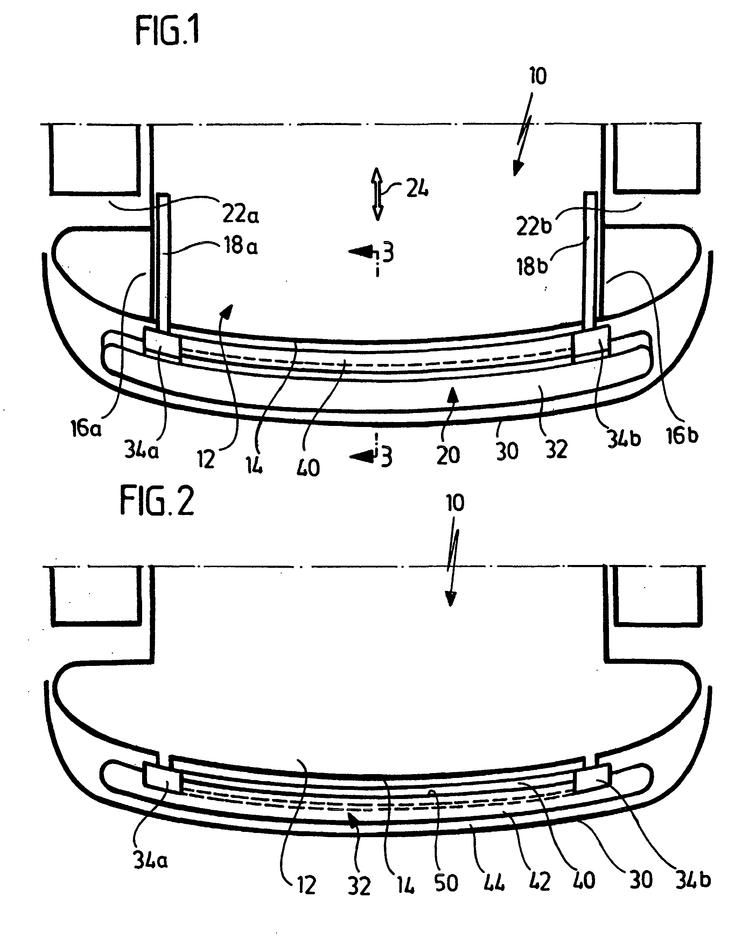

Ein erstes Ausführungsbeispiel eines erfindungsgemäßen Personenkraftfahrzeugs, dargestellt in den Fig. 1 bis 3, umfaßt eine als Ganzes mit 10 bezeichnete Fahrzeugkarosserie mit einem Fahrzeugheck 12, welches durch ein Heckabschlußblech 14 der Fahrzeugkarosserie 10 abgeschlossen ist.

An der Fahrzeugkarosserie 10 sind außerdem jeweils in Seitenbereichen 16a, b des Fahrzeughecks 12 Halter 18a, b vorgesehen, welche eine als Ganzes mit 20 bezeichnete Stoßfängereinrichtung tragen.

Die Halter 18a, b liegen vorzugsweise im Bereich des Fahrzeughecks 12 der Fahrzeugkarosserie 10 soweit seitlich nach außen versetzt, daß sie im Bereich von Radkästen 22a, 22b der Fahrzeugkarosserie 10 sich in Längsrichtung 24 der Fahrzeugkarosserie 10 erstrecken und in dieser verankert sind.

Die als Ganzes mit 20 bezeichnete Stoßfängereinrichtung umfaßt eine für ein Crashverhalten unerhebliche Stoßfängerverkleidung 30, welche von außen sichtbar ist und ein Aufprallelement 32 umschließt, welches von der Stoßfängerverkleidung 30 abgedeckt ist, jedoch das Crashverhalten bestimmt.

Das Aufprallelement 32 ist dabei in Halteaufnahmen 34a, b der Halter 18a, b gehalten und wird somit über die Halter 18a, b relativ zur Kraftfahrzeugkarosserie 10 fixiert.

Ferner ist bei dem ersten Ausführungsbeispiel ein als Ganzes mit 40 bezeichneter Anbauquerträger vorgesehen, welcher sich ebenfalls zwischen den Halteaufnahmen 34a und 34b erstreckt und ebenfalls in diesen gehalten ist.

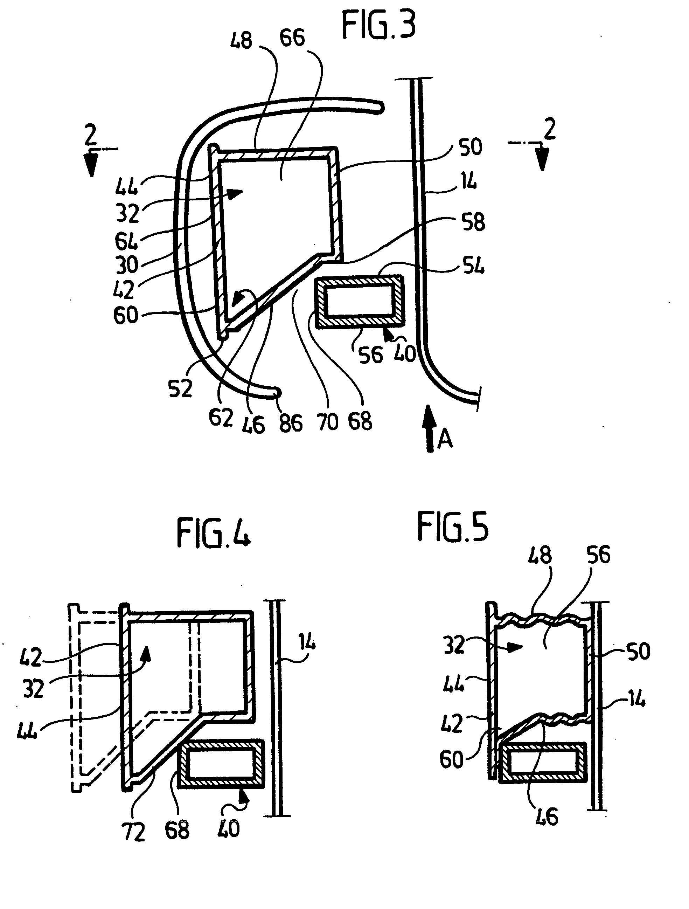

Wie in Fig. 3 dargestellt, ist das Aufprallelement 32 mit einer Aufprallwand 42 versehen, die eine der Stoßfängerverkleidung 30 zugewandte Aufprallseite 44 aufweist.

Von dieser Aufprallwand 42 ausgehend erstrecken sich eine Unterwand 46 und eine Oberwand 48 des Aufprallelements 32 in Richtung des Heckabschlußblechs 14 bis zu einer Rückwand 50 des Aufprallelements 32, welche in vertikaler Richtung über einer Oberseite 54 des Anbauquerträgers 40, vorzugsweise im Abstand von dieser, angeordnet ist.

Vorzugsweise verläuft bei dem in Fig. 3 dargestellten Ausführungsbeispiel die Unterwand 46 ausgehend von einer Unterkante 52 der Aufprallwand 42, die ungefähr in Höhe einer Unterseite 86 des Anbauquerträgers 40 liegt; nach oben, das heißt von einer Straßenoberfläche, auf der das Kraftfahrzeug steht, weg bis über die Oberseite 54 des Anbauquerträgers 40 hinaus zu einer Unterkante 58 der Rückwand 50, welche im Abstand über der Oberseite 54 des Anbauquerträgers 40 liegt.

Ein unterer Teilbereich 60 der Aufprallwand 42 bildet zusammen mit der Unterwand 46 einen ersten Teilkörper 62 des Aufprallelements 32, der in Längsrichtung 24 der Fahrzeugkarosserie gesehen hinter dem Anbauquerträger 40 liegt und sich in vertikaler Richtung über denselben Höhenbereich wie der Anbauquerträger erstreckt..

Ferner bilden die Rückwand 50, die Oberwand 48 und ein oberer Teilbereich 64 der Aufprallwand 42 einen zweiten Teilkörper 66 des Aufprallelements 32, der in vertikaler Richtung oberhalb der Oberseite 54 des Anbauquerträgers 40 liegt.

Vorzugsweise verläuft die Unterwand 46 des unteren Teilkörpers 62 schräg zur Aufprallwand 42 oder in einem in Richtung der Aufprallwand 42 konvexen Bogen, so daß zwischen der Unterwand 46 und einer dieser zugewandten Vorderseite 68 des Anbauquerträgers 40 ein Zwischenraum 70 verbleibt, der es ermöglicht, daß sich das Aufprallelement 32 in Richtung des Anbauquerträgers 40 elastisch deformieren kann, ohne sich am Anbauquerträger 40 abzustützen.

Wie in Fig. 4 dargestellt, ist dabei das Aufprallelement 32 so ausgebildet, daß bei einem Aufprall der Fahrzeugkarosserie 10 gegen eine feste Barriere eine Beaufschlagung der Aufprallseite 44 des Aufprallelements 32 erfolgt, welche dazu führt, daß sich das Aufprallelement 32 ausgehend von einer unbeeinflußten, in Fig. 4 gestrichelt dargestellten Stellung, bei elastischer Deformation in Richtung des Heckabschlußblechs 14 bewegt, und zwar maximal bis in eine Stellung, in welcher der erste Teilkörper 60 mit der Unterwand 46 die Vorderseite 68 des Anbauquerträgers 40 berührt.

Diese gesamte Deformation des Aufprallelements 32, insbesondere im Bereich zwischen den Halteaufnahmen 34a und 34b stellt eine elastische Deformation des Aufprallelements 32 dar, so daß dieses von der in Fig. 4 durchgezogen gezeichneten in Richtung des Heckabschlußblechs 14 durchgebogenen Stellung wieder in die in Fig. 4 gestrichelt dargestellte Stellung zurückspringen kann, wenn das Fahrzeug abgebremst ist und beim Aufprall auf die feste Barriere nicht schneller war als ungefähr 5 km/h.

Durch die elastische Verformung des Aufprallelements 32 erfolgt ein Abbau von Energie beim Aufprall des Personenkraftfahrzeugs auf die Barriere, so daß die gesamte Fahrzeugkarosserie 10 und insbesondere auch das Heckabschlußblech 14 unbeschädigt bleiben.

Erfolgt dagegen ein Aufprall des Personenkraftfahrzeugs mit der Stoßfängereinrichtung 20 auf eine feste Barriere mit geringer Geschwindigkeit, beispielsweise mit Geschwindigkeit im Bereich von ungefähr 5 bis ungefähr 15 km/h, so wird die Aufprallwand 42 stärker beaufschlagt, und es erfolgt nicht nur, wie in Fig. 4 dargestellt, eine elastische Deformation des Aufprallelements 32 beispielsweise im Bereich zwischen den Halteaufnahmen 34a, b, wie sie in Fig. 4 dargestellt ist, sondern, wie in Fig. 5 dargestellt, außerdem eine plastische Deformation des Aufprallelements 32, insbesondere im Bereich seiner Oberwand 48 und seiner Unterwand 46, so daß zusätzlich zur elastischen Deformation aufgrund der plastischen Deformation von Oberwand 48 und Unterwand 46 ein weiterer Abbau von Energie in dem Aufprallelement 32 erfolgen kann, wobei das Aufprallelement 32 mit der Rückwand 50 maximal bis zum Heckabschlußblech 14 bewegt wird, keinesfalls jedoch so weit bewegt wird, daß das Heckabschlußblech 14 eine Beschädigung erleidet.

Dabei wird ein wesentlicher Teil der Aufprallenergie durch Deformation der Oberwand 48 und somit insgesamt durch Volumenverringerung des zweiten Teilkörpers 66 des Aufprallelements 32 übernommen, während der erste Teilkörper 62 durch eine Bewegung der Unterwand 46 in Richtung der Vorderseite 68 des Anbauquerträgers 40 so weit bewegt werden kann, bis sich eine plastische Deformation der Unterwand 46 ebenfalls, teilweise unterstützt durch den Anbauquerträger 40 mit seiner Vorderseite 68, einstellt, der zusätzlich Energie absorbiert, so daß schließlich nach dem Aufprall des Kraftfahrzeugs auf die feste Barriere der Aufprallwand 42 im wesentlichen bis zur Vorderseite 68 des Anbauquerträgers 40 verschoben ist und der erste Teilkörper 62 im wesentlichen sein Volumen verloren hat, so daß die plastisch verformte Unterwand 46 zumindest mit einem unteren Teilbereich 72 an der Aufprallwand 42 im wesentlichen anliegen kann.

Wesentlich bei der Deformation des Aufprallelements 32 bei einem Aufprall des Kraftfahrzeugs auf eine feste Barriere mit einer Geschwindigkeit im Bereich von ungefähr 5 km/h bis zu ungefähr 15 km/h ist dabei, daß auch in diesem Fall keine Beschädigung der Fahrzeugkarosserie 10 stattfindet, insbesondere auch keine Beschädigung des Heckabschlußblechs 14.

Die Forderung an das erfindungsgemäße Aufprallelement 32 ist somit die, daß dieses so gestaltet sein muß, daß in diesem die zum Abbau der Energie bei einer Geschwindigkeit von ungefähr 5 km/h bis zu ungefähr 15 km/h erforderliche Energie durch Deformation des Aufprallelements 32 abgebaut wird, um die Fahrzeugkarosserie 10 unbeschädigt zu lassen.

Erfindungsgemäß ist dabei der entscheidende Aspekt des Aufprallelements 32 darin zu sehen, daß dieses die Möglichkeit schafft, auch beim Vorhandensein des Anbauquerträgers 40 und im wesentlichen unbeeinflußt von diesem die bei einem Aufprall erforderliche Energie abzubauen, ohne die Fahrzeugkarosserie 10, insbesondere das Abschlußblech 14 zu beschädigen.

Der erfindungsgemäße Anbauquerträger 40 kann dabei die unterschiedlichsten Funktionen aufweisen. Der erfindungsgemäße Anbauquerträger 40 kann beispielsweise dazu dienen, eine Aufnahme 80 für einen Kugelhals 82 mit einer Kupplungskugel 84 vorzusehen, wobei beispielsweise der Kugelhals 82 lösbar in die Aufnahme 80 einsetzbar und in dieser fixierbar ist.

Die Aufnahme liegt dabei zweckmäßigerweise so, daß sich der Kugelhals 82 unterhalb einer Unterkante 86 der Stoßfängerverkleidung 30 erstreckt, so daß die Kupplungskugel 84 dann auf einer dem Anbauquerträger 40 gegenüberliegenden Rückseite der Stoßfängerverkleidung 30 positionierbar ist.

Alternativ dazu ist es aber im Rahmen der erfindungsgemäßen Lösung ebenfalls vorgesehen und denkbar, den Anbauquerträger 40 dazu einzusetzen, um an diesem Gepäckträger oder Fahrradträger oder Skiträger heckseitig der Fahrzeugkarosserie 10 zu fixieren.

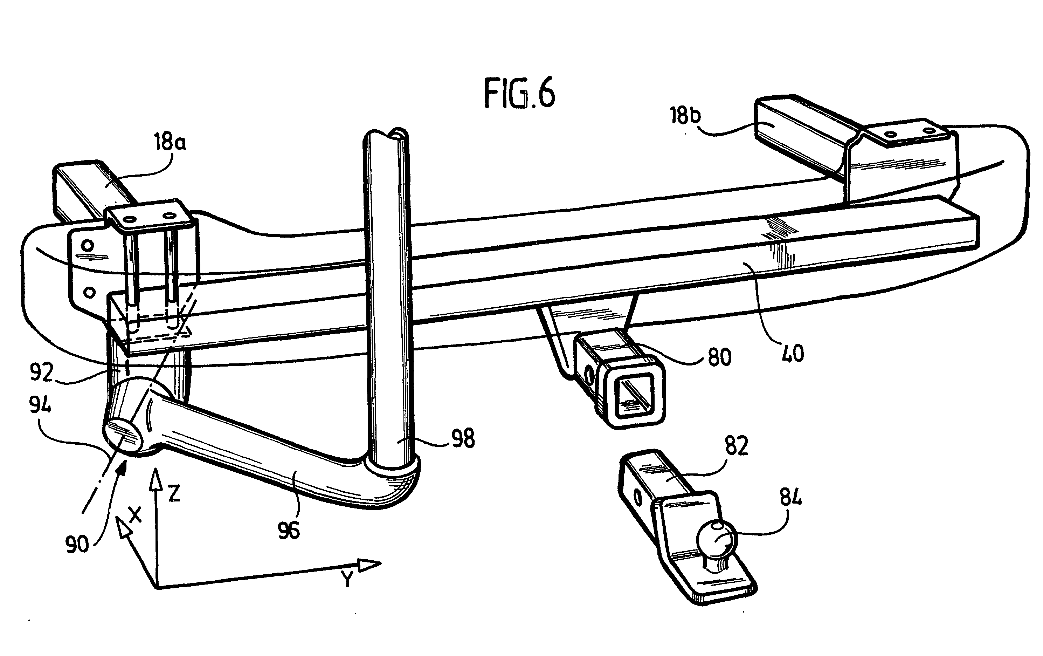

Bei einer weiteren Variante, ebenfalls dargestellt in Fig. 6, dient der Anbauquerträger 40 dazu, eine feste Verankerung für eine Ersatzradhalteeinrichtung 90 zu schaffen, die beispielsweise einen Lagerkörper 92 aufweist, an welchem ein um eine raumschräge Achse 94 gegenüber dem Lagerkörper 92 verschwenkbarer Tragarm 96 gehalten ist, von welchem ein Tragbügel 98 ausgeht, der letztlich ein Ersatzrad trägt.

Eine derartige Ersatzradhalteeinrichtung 90 würde, wenn sie ausschließlich an dem Halter 18a montiert wäre, die Verwindungssteifigkeit der Fahrzeugkarosserie 10 in dem Bereich der Verankerung des Halters 18a überbeanspruchen und somit zu einem Verzug oder zu Deformationen der Fahrzeugkarosserie 10 im Bereich der Aufnahme für den Halter 18a führen.

Ist dagegen der Halter 18a mit dem Halter 18b über den Anbauquerträger 40 starr verbunden, so erfolgt dadurch eine Querversteifung der gesamten Kraftfahrzeugkarosserie 10 im Bereich des Fahrzeughecks 12 und somit die Möglichkeit, derartige, mit großen Momenten über den Lagerkörper 92 auf die Fixierung desselben wirkende Vorrichtungen vorzusehen, wobei insbesondere durch den langen Hebelarm des Anbauquerträgers 40 mit an beliebiger Stelle mit großen Momenten wirkende Einrichtungen an dem Personenkraftfahrzeug montierbar sind.

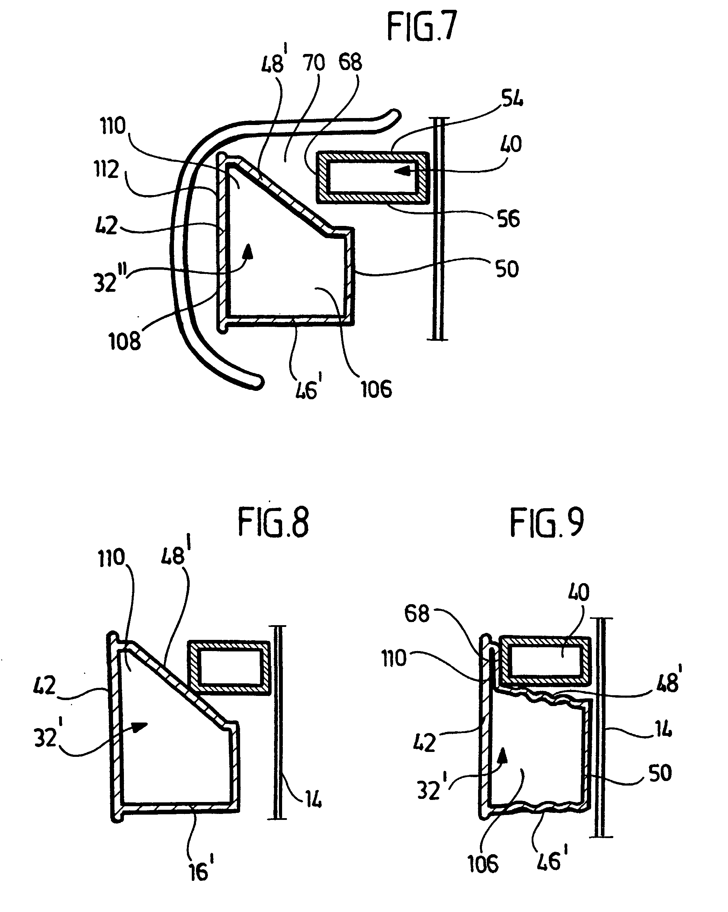

Bei einem zweiten Ausführungsbeispiel, dargestellt in Fig. 7 ist das Aufprallelement 32" so ausgebildet, daß es einen unterhalb der Unterseite 56 des Anbauquerträgers 40 liegenden zweiten Teilkörper 106 aufweist, der einen unteren Teilbereich 108 der Aufprallwand 42 umfaßt sowie die Rückwand 50 und die Unterwand 46'.

Dagegen liegt ein erster Teilkörper 110 mit einem oberen Bereich 112 der Aufprallwand 42 und der Oberwand 48' in Längsrichtung 24 der Fahrzeugkarosserie 10 vor der Vorderseite 68 des Anbauquerträgers 40 und erstreckt sich nach oben bis in Höhe der Oberseite 54 desselben.

Auch bei diesem Ausführungsbeispiel ist der Zwischenraum 70 zwischen dem vor der Vorderseite 68 liegenden oberen Teilkörper 110 vorgesehen, welcher, wie in Fig. 8 dargestellt, es zuläßt, daß sich bei einem Aufprall des Fahrzeugs gegen eine feste Barriere bei einer Geschwindigkeit im Bereich von 0 bis ungefähr 5 km/h das gesamte Aufprallelement 32' lediglich elastisch verformt und sich dabei in Richtung des Heckabschlußblechs 14 der Fahrzeugkarosserie bewegt, ohne jedoch das Heckabschlußblech 14 oder andere Teile der Fahrzeugkarosserie 10 zu beschädigen.

Durch die elastische Deformation des Aufprallelements 32' erfolgt ebenfalls, wie bereits im Zusammenhang mit dem ersten Ausführungsbeispiel beschrieben, ein Energieabbau der Beschädigungen der Fahrzeugkarosserie 10 verhindert.

Liegt dabei die Geschwindigkeit der Fahrzeugkarosserie 10 beim Aufprall gegen eine feste Barriere im Bereich einer Geschwindigkeit von ungefähr 5 bis ungefähr 15 km/h, so erfolgt auch bei dem zweiten Ausführungsbeispiel der erfindungsgemäßen Lösung eine plastische Deformation des Aufprallelements 32" und zwar so, daß die Aufprallwand 42 bis nahe an die Vorderseite 68 des Anbauquerträgers 40 verschoben wird, während sich die Unterwand 46' und die Oberwand 48' plastisch verformen. Dabei trägt die Rückwand 50 dazu bei, das gesamte Aufprallelement so zu versteifen, daß selbst nach einem derartigen Aufprall das Heckabschlußblech 14 unversehrt bleibt und die gesamte Energie des Aufpralls durch die plastische Deformation des Aufprallelements 32" abgebaut wird.

Bei dieser plastischen Deformation wird der erste Teilkörper 110 im wesentlichen vollständig volumenreduziert, während der zweite Teilkörper 106 nur eine teilweise Volumenreduktion bis zu einem Faktor von ungefähr 2 aufgrund der plastischen Deformation erfährt und somit bis zum Ende des Energieabbaus eine ausreichende Steifigkeit behalten kann.

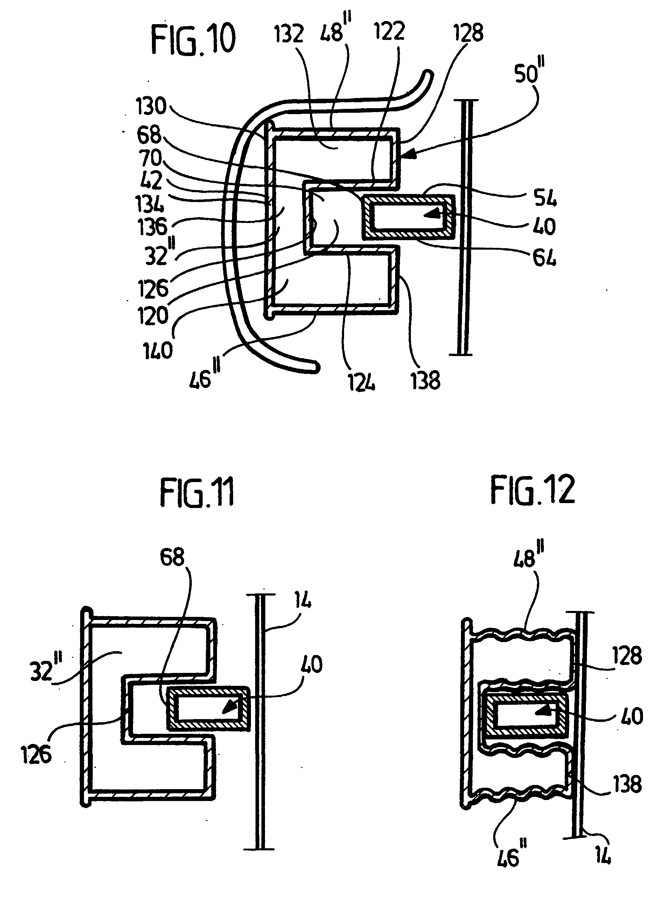

Bei einem dritten Ausführungsbeispiel, dargestellt in Fig. 10 ist das Aufprallelement 32" so ausgebildet, daß sich die Aufprallwand 42 sowohl über die Oberseite 54 als auch die Unterseite 56 des Anbauquerträgers 40 hinauserstreckt und die Rückwand 50" eine U-förmige Vertiefung 120 aufweist, welche der Vorderseite 68 des Anbauquerträgers 40 gegenüberliegt, wobei die Vertiefung 120 durch zwei Seitenwände, nämlich eine obere Seitenwand 122 und eine untere Seitenwand 124 begrenzt ist, die ihrerseits wieder durch eine Abschlußwand 126 verbunden ist, welche bei dem dritten Ausführungsbeispiel zur Schaffung des Zwischenraums 70 im Abstand von der Vorderseite 68 des Anbauquerträgers 40 angeordnet ist.

Somit bildet die Rückwand 50" mit einem oberen Wandbereich 128, der Oberwand 48" und einem oberen Wandbereich 130 der Aufprallwand 42 einen zweiten Teilkörper 132, mit einem mittleren Bereich 134 der Aufprallwand 42 und der Wand 126 einen ersten Teilkörper 136 und mit einem unteren Wandbereich 138 der Unterwand 46" und der unteren Seitenwand 124 der Vertiefung wiederum einen zweiten Teilkörper 140.

Erfolgt nun ein Aufprall des Fahrzeugs bei niedriger Geschwindigkeit im Bereich von 0 bis 5 km/h, so hat das Aufprallelement 32" die Möglichkeit der elastischen Verformung ohne den Anbauquerträger 40 zu berühren oder sich an diesem abzustützen, wie dies in Fig. 11 dargestellt ist, und ohne das Abschlußblech 14 des Hecks 12 der Fahrzeugkarosserie 10 zu deformieren.

Erfolgt ferner ein Aufprall mit geringer Geschwindigkeit im Bereich von ungefähr 5 km/h bis 15 km/h so erfolgt, wie in Fig. 12 dargestellt, eine plastische Deformation im Bereich der Oberwand 48" und der Unterwand 46", wobei der obere Bereich 128 und der untere Bereich 138 der Rückwand 50" bis nahe an das Heckabschlußblech 14 der Karosserie 10 bewegt werden, ohne dieses jedoch zu beschädigen. Dabei kann beispielsweise gegen Ende der plastischen Deformation eine Abstützung der Wand 126 an der Vorderseite 68 des Anbauquerträgers 40 erfolgen, muß jedoch nicht erfolgen.

Aufgrund der Tatsache, daß sich bei allen Ausführungsbeispielen das Aufprallelement 32, 32' oder 32" sowohl elastisch als auch plastisch deformiert, ohne sich dabei wesentlich an dem Anbauquerträger 40 abzustützen, besteht auch die Möglichkeit, das nicht erfindungsgemäße Aufprallelement 32, wie dies im Zusammenhang mit einem Beispiel dargestellt ist, ohne den Anbauquerträger 40 einzusetzen und dabei das Aufprallelement 32 identisch wie bei dem voranstehenden Ausführungsbeispiel einzusetzen.

Erfolgt dabei ein Aufprall des Kraftfahrzeugs in dem vorstehend beschrieben Ausmaße, so erfolgt einerseits, wie in Fig. 14 dargestellt, zunächst eine elastische Deformation, wenn die Geschwindigkeit beim. Aufprall im Bereich von 0 bis ungefähr 5 km/h liegt, während bei einer Geschwindigkeit in einem Bereich von ungefähr 5 bis ungefähr 15 km/h bei dem Aufprall eine plastische Deformation des Aufprallelements 32 erfolgt, die jedoch nicht zu einer Beschädigung des Heckabschlußblechs 14 der Fahrzeugkarosserie 10 führt.

Dabei wird stets ein Freiraum 150 freigehalten, der mindestens die Volumenausdehnung eines einsetzbaren Anbauquerträgers 40 aufweist, vorzugsweise größer ist als dieser.

Es besteht somit die Möglichkeit, das Aufprallelement 32 bei allen Kraftfahrzeugen einzusetzen und je nach Fahrzeugtyp und Notwendigkeit von Anbauten den Anbauquerträger 40 hinzuzunehmen und zusätzlich auch diesen in die Halter 18 einzusetzen, ohne daß dabei der Energieabbau beim Aufprall verändert wird, so daß das Sicherheitsverhalten eines Kraftfahrzeugs unabhängig ist von der Existenz des Anbauquerträgers 40.

Somit besteht auch insbesondere in einfacher Weise die Möglichkeit, den Anbauquerträger 40 nachzurüsten, ohne das Aufprallelement 32 als solches austauschen zu müssen, sondern dieses kann unverändert weiterbenutzt werden, wobei zum Einsetzen des Anbauquerträgers 40 beispielsweise zunächst das Aufprallelement 32 aus den Aufnahmen 34 entfernt, der Anbauquerträger 40 eingesetzt und dann das Aufprallelement 32 ebenfalls wieder eingesetzt wird.

## Patentansprüche

1. Personenkraftfahrzeug umfassend eine Fahrzeugkarosserie mit einem Fahrzeugheck (12), eine im Abstand von dem Fahrzeugheck (12) angeordnete Stoßfängereinrichtung (20), welche eine Stoßfängerverkleidung (30), ein durch elastische Deformation Aufprallenergie abbauendes Aufprallelement (32), das seinerseits eine dem Fahrzeugheck (12) abgewandte Aufprallseite (44) und mindestens einen ersten Teilkörper (62, 110, 136) umfaßt, und einen zwischen einer seits einer dem Fahrzeugheck (12) zugewandten Rückseite (46, 48', 126) zumindest des ersten Teilkörpers (62, 110, 136) des Aufprallelements (32) und andererseits dem Fahrzeugheck (12) angeordneten Anbauquerträger (40) aufweist, wobei der Anbauquerträger (40) im Bereich zweier seitlicher Montagestellen (34) mit der Fahrzeugkarosserie (10) verbunden ist,
**dadurch gekennzeichnet, daß** auch das Aufprallelement (32) über die selben Montagestellen (34) mit der Fahrzeugkarosserie (10) verbunden ist, daß in Fahrzeuglängsrichtung (24) zwischen der Rückseite (46, 48', 126) des ersten Teilkörpers (62, 110, 136) und einer dieser Rückseite (46, 48', 126) zugewandten Vorderseite (68) des Anbauquerträgers (40) ein Zwischenraum (70) vorgesehen ist und daß das Aufprallelement (32) mit einer derartigen elastischen Energieabbaukapazität versehen ist, das bei einer niedrigen Aufprallgeschwindigkeit des Kraftfahrzeugs im Bereich von 0 bis ungefähr 5 km/h gegen eine feste Barriere lediglich eine derartige elastische Deformation des Aufprallelements (32) erfolgt, daß die Rückseite (46, 48', 126) des ersten Teilkörpers (62, 110, 136) maximal die Vorderseite (68) des Anbauquerträgers (40) erreicht.

2. Personenkraftfahrzeug nach Anspruch 1, **dadurch gekennzeichnet, daß** das Aufprallelement einen zweiten Teilkörper (66, 106, 132, 140) aufweist, welcher in vertikaler Richtung gegenüber dem Anbauquerträger (40) versetzt angeordnet ist.

3. Personenkraftfahrzeug nach Anspruch 2, **dadurch gekennzeichnet, daß** der zweite Teilkörper (66, 106, 132, 140) mit dem ersten Teilkörper (62, 110, 136) fest verbunden ist.

4. Personenkraftfahrzeug nach Anspruch 3, **dadurch gekennzeichnet, daß** der zweite Teilkörper (66, 106, 132, 140) mit dem ersten Teilkörper (62, 11, 136) ein einstückiges Teil bildet.

5. Personenkraftfahrzeug nach einem der Ansprüche 2 bis 4, **dadurch gekennzeichnet, daß** der zweite Teilkörper (66, 106, 132, 140) den Anbauquerträger (40) in Fahrzeuglängsrichtung (24) und in Richtung des Fahrzeughecks (12) übergreift.

6. Personenkraftfahrzeug nach einem der voranstehenden Ansprüche, **dadurch gekennzeichnet, daß** das Aufprallelement (32) mit einer derartigen plastischen Energieabbaukapazität versehen ist, das bei einer geringen Aufprallgeschwindigkeit im Bereich von ungefähr 5 km/h bis ungefähr 15 km/h gegen eine feste Barriere eine derartige plastische Deformation des Aufprallelements (32) erfolgt, daß die Aufprallseite (44) maximal die Vorderseite (68) des Anbauquerträgers (40) erreicht.

7. Personenkraftfahrzeug nach einem der voranstehenden Ansprüche, **dadurch gekennzeichnet, daß** bei der plastischen Deformation des Aufprallelements (32) der in Fahrzeuglängsrichtung (24) im Abstand vom Anbauquerträger (40) angeordnete erste Teilkörper (62, 110, 136) eine Volumenverringerung auf weniger als 20% seines Ausgangsvolumens erfährt.

8. Personenkraftfahrzeug nach einem der voranstehenden Ansprüche, **dadurch gekennzeichnet, daß** bei der plastischen Deformation des Aufprallelements (32) der zweite Teilkörper (66, 106, 132, 140) des Aufprallelements (32) eine Volumenverringerung auf weniger als 70% seines Ausgangsvolumens erfährt.

9. Personenkraftfahrzeug nach einem der voranstehenden Ansprüche, **dadurch gekennzeichnet, daß** das Aufprallelement (32) so ausgebildet ist, daß bei einem plastischen Energieabbau bei der geringen Aufprallgeschwindigkeit des Kraftfahrzeugs von ungefähr 5 km/h bis ungefähr 15 km/h auf eine feste Barriere eine Rückseite (50, 50', 128, 138) des zweiten Teilkörpers (66, 106, 132, 140) maximal das Fahrzeugheck (12) erreicht.

10. Personenkraftfahrzeug nach einem der Ansprüche 2 bis 8, **dadurch gekennzeichnet, daß** der zweite Teilkörper (66, 132) in vertikaler Richtung oberhalb des Anbauquerträgers (40) liegt.

11. Personenkraftfahrzeug nach einem der Ansprüche 2 bis 10, **dadurch gekennzeichnet, daß** der zweite Teilkörper (106, 140) in vertikaler Richtung unterhalb des Anbauquerträgers (40) liegt.

12. Personenkraftfahrzeug nach einem der Ansprüche 2 bis 11, **dadurch gekennzeichnet, daß** das Aufprallelement (32") einen in vertikaler Richtung oberhalb des Anbauquerträgers (40) und eine in vertikaler Richtung unterhalb des Anbauquerträgers (40) liegenden zweiten Teilkörper (132, 140) aufweist.

13. Personenkraftfahrzeug nach Anspruch 12, **dadurch gekennzeichnet, daß** die beiden zweiten Teilkörper (132, 140) den Anbauquerträger (40) in Fahrzeuglängsrichtung (24) übergreifen.

14. Personenkraftfahrzeug nach einem der voranstehenden Ansprüche, **dadurch gekennzeichnet, daß** an dem Anbauquerträger (40) ein Lagerelement (80) für eine Anhängekupplung (82, 84) angeordnet ist.

15. Personenkraftfahrzeug nach einem der voranstehenden Ansprüche, **dadurch gekennzeichnet, daß** an dem Anbauquerträger (40) ein Lagerelement (92) für Hecklasten (90) angeordnet ist.

## Claims

1. A passenger motor vehicle comprising a vehicle body having a vehicle rear part (12), a bumper device (20) which is spaced from the rear part of the vehicle (12) and comprises a bumper cladding (30), an impact element (32) for diminishing impact energy by means of a resilient deformation process and which, for its part, comprises an impact face (44) that is remote from the rear part of the vehicle (12) and incorporates at least a first sub-body (62, 110, 136), and an additional cross beam (40) which is arranged between a rear face (46, 48', 126) of at least the first sub-body (62, 110, 136) of the impact element (32) facing the rear part of the vehicle (12) on the one hand and the rear part of the vehicle (12) on the other, wherein the additional cross beam (40) is connected to the vehicle body (10) in the region of at two lateral mounting points (34),
**characterized in that** the impact element (32) is also connected to the vehicle body (10) at the same mounting points (34), **in that** a gap (70) is provided in the longitudinal direction of the vehicle (24) between the rear face (46, 48', 126) of the first sub-body (62, 110, 136) and a front face (68) of the additional cross beam (40) facing this rear face (46, 48', 126) and **in that** the impact element (32) is provided with a resilient capacity for diminution of energy which is such that, at a low impact speed of the motor vehicle within a range of 0 to approximately 5 km/h against a rigid barrier, there only occurs a resilient deformation of the impact element (32) which is such that the rear face (46, 48', 126) of the first sub-body (62, 110, 136) reaches at most the front face (68) of the additional cross beam (40).

2. A passenger motor vehicle in accordance with Claim 1, **characterized in that** the impact element comprises a second sub-body (66, 106, 132, 140) which is displaced in the vertical direction with respect to the additional cross beam (40).

3. A passenger motor vehicle in accordance with Claim 2, **characterized in that** the second sub-body (66, 106, 132, 140) is rigidly connected to the first sub-body (62, 110, 136).

4. A passenger motor vehicle in accordance with Claim 3, **characterized in that** the second sub-body (66, 106, 132, 140) forms a one-piece part with the first sub-body (62, 11, 136).

5. A passenger motor vehicle in accordance with any of the Claims 2 to 4, **characterized in that** the second sub-body (66, 106, 132, 140) overlaps the additional cross beam (40) in the longitudinal direction of the vehicle (24) and in the direction of the rear part of the vehicle (12).

6. A passenger motor vehicle in accordance with any of the preceding Claims, **characterized in that** the impact element (32) is provided with a plastic capacity for the diminution of energy which is such that, at a low impact speed within a range of approximately 5 km/h to approximately 15 km/h against a rigid barrier, there occurs a plastic deformation of the impact element (32) which is such that the impact face (44) reaches at most the front face (68) of the additional cross beam (40).

7. A passenger motor vehicle in accordance with any of the preceding Claims, **characterized in that**, in the course of the plastic deformation of the impact element (32), the first sub-body (62, 110, 136) that is spaced from the additional cross beam (40) in the longitudinal direction of the vehicle (24) experiences a decrease in volume to less than 20% of its initial volume.

8. A passenger motor vehicle in accordance with any of the preceding Claims, **characterized in that**, in the course of the plastic deformation of the impact element (32), the second sub-body (66, 106, 132, 140) of the impact element (32) experiences a decrease in volume to less than 70% of its initial volume.

9. A passenger motor vehicle in accordance with any of the preceding Claims, **characterized in that** the impact element (32) is formed in such a way that in the case of a plastic diminution of energy in the event of the low impact speed of the motor vehicle of from approximately 5 km/h to approximately 15 km/h against a rigid barrier, a rear face (50, 50', 128, 138) of the second sub-body (66, 106, 132, 140) reaches at most the rear part of the vehicle (12).

10. A passenger motor vehicle in accordance with any of the Claims 2 to 8, **characterized in that** the second sub-body (66, 132) is located above the additional cross beam (40) in the vertical direction.

11. A passenger motor vehicle in accordance with any of the Claims 2 to 10, **characterized in that** the second sub-body (106, 140) is located below the additional cross beam (40) in the vertical direction.

12. A passenger motor vehicle in accordance with any of the Claims 2 to 11, **characterized in that** the impact element (32") comprises a second sub-body (132, 140) located above the additional cross beam (40) in the vertical direction and one located below the additional cross beam (40) in the vertical direction.

13. A passenger motor vehicle in accordance with Claim 12, **characterized in that** the two second sub-bodies (132, 140) overlap the additional cross beam (40) in the longitudinal direction of the vehicle (24).

14. A passenger motor vehicle in accordance with any of the preceding Claims, **characterized in that** a mounting element (80) for a trailer coupling (82, 84) is arranged on the additional cross beam (40).

15. A passenger motor vehicle in accordance with any of the preceding Claims, **characterized in that** a mounting element (92) for tail loads (90) is arranged on the additional cross beam (40).

## Revendications

1. Véhicule automobile comprenant une carrosserie de véhicule dotée d'une partie arrière (12), un dispositif formant pare-chocs (20) disposé à distance de la partie arrière (12) du véhicule, lequel dispositif formant pare-chocs comprend un revêtement de pare-chocs (30), un élément résistant aux chocs (32) diminuant l'énergie d'impact par déformation élastique, lequel élément résistant aux chocs comprend, quant à lui, un côté résistant aux chocs (44) placé à l'opposé de la partie arrière (12) du véhicule et comprend au moins un premier corps partiel (62, 110, 136), et présente une traverse rapportée (40) disposée entre, d'une part, un côté arrière (46, 48', 126) - tourné vers la partie arrière (12) du véhicule - au moins du premier corps partiel (62, 110, 136) de l'élément résistant aux chocs (32) et, d'autre part, la partie arrière (12) du véhicule, où la traverse rapportée (40) est reliée, dans la zone de deux points de montage latéraux (34), à la carrosserie du véhicule (10),
**caractérisé**
- **en ce que** l'élément résistant aux chocs (32) est relié également à la carrosserie du véhicule (10) par les mêmes points de montage (34),
- **en ce qu'**il est prévu, dans la direction longitudinale (24) du véhicule, un espace intermédiaire (70) situé entre le côté arrière (46, 48', 126) du premier corps partiel (62, 110, 136), et un côté avant (68) de la traverse rapportée (40), tourné vers ce côté arrière (46, 48', 126), et
- **en ce que** l'élément résistant aux chocs (32) est doté d'une telle capacité de diminution élastique de l'énergie que dans le cas d'une faible vitesse d'impact du véhicule automobile contre une barrière fixe, dans la plage de vitesse comprise entre 0 km/h et environ 5 km/h, il se produit seulement une telle déformation élastique de l'élément résistant aux chocs (32) que le côté arrière (46, 48', 126) du premier corps partiel (62, 110, 136) atteint au maximum le côté avant (68) de la traverse rapportée (40).

2. Véhicule automobile selon la revendication 1, **caractérisé en ce que** l'élément résistant aux chocs présente un second corps partiel (66, 106, 132, 140) qui est disposé, dans le sens vertical, en étant décalé par rapport à la traverse rapportée (40).

3. Véhicule automobile selon la revendication 2, **caractérisé en ce que** le second corps partiel (66, 106, 132, 140) est solidement relié au premier corps partiel (62, 110, 136).

4. Véhicule automobile selon la revendication 3, **caractérisé en ce que** le second corps partiel (66, 106, 132, 140) forme une seule et même pièce avec le premier corps partiel (62, 110, 136).

5. Véhicule automobile selon l'une quelconque des revendications 2 à 4, **caractérisé en ce que** le second corps partiel (66, 106, 132, 140) recouvre la traverse rapportée (40) dans la direction longitudinale (24) du véhicule et en direction de la partie arrière (12) du véhicule.

6. Véhicule automobile selon l'une quelconque des revendications précédentes, **caractérisé en ce que** l'élément résistant aux chocs (32) est doté d'une telle capacité de diminution plastique de l'énergie que dans le cas d'une faible vitesse d'impact contre une barrière fixe, dans la plage de vitesse comprise entre environ 5 km/h et environ 15 km/h, il se produit une telle déformation plastique de l'élément résistant aux chocs (32) que le côté résistant aux chocs (44) atteint au maximum le côté avant (68.) de la traverse rapportée (40).

7. Véhicule automobile selon l'une quelconque des revendications précédentes, **caractérisé en ce que** dans le cas de la déformation plastique de l'élément résistant aux chocs (32), le premier corps partiel (62, 110, 136) disposé, dans la direction longitudinale (24) du véhicule, à distance de la traverse rapportée (40), subit une diminution de volume égale à moins de 20 % de son volume initial.

8. Véhicule automobile selon l'une quelconque des revendications précédentes, **caractérisé en ce que** dans le cas de la déformation plastique de l'élément résistant aux chocs (32), le second corps partiel (66, 106, 132, 140) de l'élément résistant aux chocs (32) subit une diminution de volume égale à moins de 70 % de son volume initial.

9. Véhicule automobile selon l'une quelconque des revendications précédentes, **caractérisé en ce que** l'élément résistant aux chocs (32) est conçu de manière telle, que lors d'une diminution plastique de l'énergie se produisant à la faible vitesse d'impact du véhicule automobile contre une barrière fixé, dans la plage de vitesse comprise entre environ 5 km/h et environ 15 km/h, un côté arrière (50, 50', 128, 138) du second corps partiel (66, 106, 132, 140) atteigne au maximum la partie arrière (12) du véhicule.

10. Véhicule automobile selon l'une quelconque des revendications 2 à 8, **caractérisé en ce que** le second corps partiel (66, 132) se trouve, dans le sens vertical, au-dessus de la traverse rapportée (40).

11. Véhicule automobile selon l'une quelconque des revendications 2 à 10, **caractérisé en ce que** le second corps partiel (106, 140) se trouve, dans le sens vertical, au-dessous de la traverse rapportée (40).

12. Véhicule automobile selon l'une quelconque des revendications 2 à 11, **caractérisé en ce que** l'élément résistant aux chocs (32") présente un second corps partiel (132, 140) se trouvant, dans le sens vertical, au-dessus de la traverse rapportée (40), l'autre second corps partiel se trouvant, dans le sens vertical, au-dessous de la traverse rapportée (40).

13. Véhicule automobile selon la revendication 12, **caractérisé en ce que** les deux seconds corps partiels (132, 140) recouvrent la traverse rapportée (40) dans la direction longitudinale (24) du véhicule.

14. Véhicule automobile selon l'une quelconque des revendications précédentes, **caractérisé en ce qu'**un tourillon (80) pour un attelage de remorque (82, 84) est disposé sur la traverse rapportée (40).

15. Véhicule automobile selon l'une quelconque des revendications précédentes, **caractérisé en ce qu'**un tourillon (92) pour des charges arrière (90) est disposé sur la traverse rapportée (40).
